Europäisches Patentamt

European Patent Office

Office européen des brevets

(19)

(11) Veröffentlichungsnummer : **0 146 949**
**B1**

# (12) EUROPÄISCHE PATENTSCHRIFT

(45) Veröffentlichungstag der Patentschrift :
17.05.89

(21) Anmeldenummer : 84116069.0

(22) Anmeldetag : 21.12.84

(51) Int. Cl.⁴ : **C 01 C   1/18**

(54) Verfahren zur Herstellung von Ammonnitrat.

(30) Priorität : 29.12.83 DE 3347404

(43) Veröffentlichungstag der Anmeldung :
03.07.85 Patentblatt 85/27

(45) Bekanntmachung des Hinweises auf die Patenterteilung : 17.05.89 Patentblatt 89/20

(84) Benannte Vertragsstaaten :
BE DE FR GB IT NL

(56) Entgegenhaltungen :
FR-A- 1 356 054
FR-A- 1 492 779
US-A- 3 285 695

(73) Patentinhaber : HOECHST AKTIENGESELLSCHAFT
Postfach 80 03 20
D-6230 Frankfurt am Main 80 (DE)

(72) Erfinder : Ulrichs, K., Dr., Dipl.-Chem.
Rüsterweg 1
D-4200 Oberhausen 11 (DE)
Erfinder : Hibbel, Josef, Dipl.-Ing.
Bruchsteg 13
D-4200 Oberhausen 11 (DE)
Erfinder : Schmidt, Volkmar, Dipl.-Ing.
Lützowstrasse 51
D-4200 Oberhausen 11 (DE)
Erfinder : Lieder, Bernhard
Siegfriedstrasse 61
D-4250 Bottrop (DE)
Erfinder : Scheve, Heinrich, Dipl.-Ing.
Im Torfveen 18
D-4200 Oberhausen 11 (DE)
Erfinder : Schulze-Frenking, B. Dipl.-Ing.
Gräwingheide 26
D-4270 Dorsten 1 (DE)
Erfinder : Höfs, Wolfgang, Dipl.-Ing.
Höhenweg 18
D-4200 Oberhausen 11 (DE)
Erfinder : Nottebohm, Jürgen, Dipl.-Ing.
Elsternstrasse 5
D-4200 Oberhausen 11 (DE)

EP 0 146 949 B1

**Beschreibung**

Die vorliegende Erfindung betrifft ein Verfahren zur Herstellung von Ammonnitrat, wobei die aus der Umsetzung von Salpetersäure und Ammoniak freiwerdende Neutralisationswärme sowohl zur Gewinnung von reinem Wasserdampf als auch zur weiteren Konzentration der gebildeten Ammonnitrat-Lösungen genutzt wird.

Durch Umsetzung von wässriger Salpetersäure mit gasförmigem oder flüssigem Ammoniak bildet sich in Abhängigkeit von der Konzentration beider Einsatzstoffe eine entsprechend konzentrierte wässrige Ammonnitrat-Lösung. Bekanntlich verläuft diese Bildung von Ammonnitrat stark exotherm und setzt eine Wärmemenge von 34,8 Kcal/Mol (entsprechend 145,7 KJ/Mol) frei. Es hat daher nicht an Versuchen gefehlt, die freiwerdende Reaktionswärme zu nutzen, sei es, um die gebildete Ammonnitrat-Lösung weiter zu konzentrieren oder aber die Wärme an anderer Stelle zu nutzen.

Die Verfahren zur Herstellung von Ammonnitrat lassen sich in zwei Gruppen einteilen :

In den ersten Gruppe werden bei Atmosphärendruck oder Drücken von 2 bis 3 bar Salpetersäure und Ammoniak in eine Reaktor eingeführt. Temperatur und Konzentration der sich bildenden Ammonnitrat-Lösung werden so gewählt, daß die Ammonnitrat-Lösung infolge der freiwerdenden Neutralisationswärme im Reaktor zum Sieden gelangt und sich gleichzeitig konzentriert, wobei bereits im Reaktor die Ammonnitratlösung weitestgehend, beispielsweise bis ca. 90 Gew.-%, aufkonzentriert wird. Wenn der Reaktor unter einem Druck von 2 bis 3 bar betrieben wird, kann die Ammonnitrat-Lösung entspannt werden, Während dieses Entspannungsvorganges konzentriert sich die Lösung weiter.

Die aus dem Reaktor austretende Ammonnitrat-Lösung erreicht eine Konzentration von etwa 90 %. Bei diesem Verfahren wird der in dem Reaktor entstehende Brüden dazu benutzt, die Reaktionsteilnehmer vor ihrem Eintritt in den Reaktor aufzuwärmen oder auch um Salpetersäure vor ihrem Eintritt in den Reaktor zu konzentrieren.

Die Handhabung dieser Prozesse ist einfach, und es wird der Gefahr einer möglichen Zersetzung des Ammonnitrats durch Anwendung relativ niedriger Temperaturen bis etwa 160 °C begegnet.

Der Nachteil dieser Verfahren besteht in einer schleichten Nutzung der freigesetzten Reaktionswärme, da der abgeführte Brüden nicht das für die abschließende Aufkonzentrierung der Ammonnitrat-Schmelze erforderliche Temperatur-Niveau aufweist.

Um die erforderliche Endkonzentration der Ammonnitrat-Schmelze von üblicherweise 95 Gew.-% zu erreichen, muß zusätzlich Fremddampf verwendet werden.

Die zweite Gruppe von Verfahren arbeitet bei höheren Drücken als die erste Gruppe, d. h.

oberhalb 3 bar, und die Temperaturen liegen dann über 160 °C. Im Reaktor bildet sich eine Ammonnitrat-Lösung aus, die lediglich eine Konzentration von 70 bis ca. 80 Gew.-% erreicht. Der aus dem Reaktor abgeführte Brüden besitzt, wie zuvor erläutert, einen höheren Druck und damit höhere Temperaturen. Er kann daher zur weiteren Aufkonzentrierung der Ammonnitrat-Lösung eingesetzt werden. Die Konzentration der aus dem Reaktor entstammenden Ammonnitratlösung erfolgt anschließend in einer Zone bzw. in einem Behälter durch Entspannen und Beheizen mittels des aus dem Reaktor abgeführten Brüdens.

Der Hauptnachteil dieser Verfahren besteht darin, daß der freigesetzte Brüden stets durch Ammonnitrat und Ammoniak verunreinigt ist. Dadurch ergeben sich Schwierigkeiten, den Brüden weiteren Verwendungszwekken, wie anderen chemischen Prozessen, zuzuleiten. Außerdem führen die kondensierten Dämpfe infolge des Gehaltes an Ammoniak zu einer unzulässigen Umweltbelastung. Das macht einen zusätzlichen apparativen Aufwand zur Aufarbeitung des Abwassers erforderlich.

Aus der DE-AS 11 97 857 ist ein Verfahren zur Herstellung von Ammonnitrat bekannt, das von einer mindestens 60 %-igen Salpetersäure und wasserfreiem Ammoniak ausgeht. Die Neutralisation erfolgt unter Anwendung eines Druckes zwischen 1 und 4 kg/cm² (0,981 bis 3,924 bar) und bei Temperaturen von 145 bis 160 °C, wobei keine wesentliche Eindampfung der Reaktionsmischung erfolgt. Die freiwerdende Neutralisationswärme wird mittels eines im Reaktor angeordneten Wärmeaustauschers in reinen Wasserdampf, der teilweise dazu dient, die Ammonnitrat-Lösung zu konzentrieren, umgesetzt.

Beim Eintreten in einen Verdampfer, der mit Unterdruck betrieben wird, entspannt sich die wässrige Ammonnitrat-Lösung unter Bildung von Brüden auf Kosten der fühlbaren Wärme der Lösung. Unterstützt wird dieser Eindickungsvorgang dadurch, daß der mittels des im Reaktor angeordneten Wärmeaustauschers gewonnene reine Wasserdampf von ungefähr 3 kg/cm² (2,943 bar) einen Wärmetauscher, der in dem Verdampfer angebracht ist, beheizt.

Die FR-A 15 74 094 betrifft ein zweistufiges Verfahren zur Herstellung von Ammonnitrat. In der ersten Stufe wird 95 bis 99,75 % der Salpetersäure neutralisiert, ein Teil der Reaktionsmischung in eine zweite Neutralisationsstufe geführt und dort kontinuierlich abgezogen. Beide Neutralisationsstufen arbeiten stets unter dem gleichen Druck, für den ein Bereich von 1 bis 10 bar angegeben wird.

Die verwendete Salpetersäure kann Konzentrationen von 40 bis 70 Gew.-% aufweisen. Sie wird in der ersten Stufe zu 95 bis 99,75 % neutralisiert.

Die freigesetzte Reaktionswärme bringt das Reaktionsgemisch zum Sieden, trägt somit zur Zirkulation der Lösung bei und konzentriert sie auf. Der dabei gebildete Brüden wird am Kopf des Reaktors abgezogen.

Eine optimale Nutzung der Reaktionswärme, die bei der Neutralisation von Ammoniak mit Salpetersäure freigesetzt wird, ist bei den bislang beschrieben Verfahren nicht erreicht. Zwar wird, wie in der DE-AS 11 97 857 beschrieben, mittels eines im Reaktor eingebauten Wärmeaustauschers ein Teil der Reaktionswärme in Form von Wasserdampf abgeführt. Die Nutzung desselben zum Aufkonzentrieren der Ammonnitrat-Lösung und zum Betreiben des Vakuumaggregates verringert jedoch den Anteil, der für weitere Anwendungen außerhalb des Prozesses zur Verfügung gestellt werden kann.

Ein Verzicht, mittels des reinen Wasserdampfes die Ammonnitrat-Lösung aufzukonzentrieren, führt zwar zu einer Erhöhung der Menge an reinem Wasserdampf, die unabhängig von dem Teil der Reaktionswärme, der beispielsweise als Brüden für die Herstellung der Ammonnitrat-Lösung benötigt wird, anfällt, stellt jedoch nicht sicher, daß die Gewinnung von reinem Wasserdampf stets optimal erfolgt.

Da im laufenden Betrieb sich die Reaktionsbedingungen nicht auf Dauer vollkommen konstant halten lassen, sondern infolge von außen herrührender Einflüsse, wie Schwankungen von Konzentration und Temperatur der Einsatzstoffe (wässrige Salpetersäure, Ammoniakgas), sich Abweichungen ergeben, wird sich auch stets ein entsprechendes Verhältnis der Wärmemenge, die als reiner Wasserdampf theoretisch nutzbar wäre und desjenigen Anteils der Reaktionswärme, der in Form von Brüden für die Ausübung des Prozesses (Aufkonzentrieren der Ammonnitrat-Lösung) benötigt wird, einstellen.

Um eine optimale Nutzung der Reaktionswärme zu erreichen, muß dieser Umstand berücksichtigt werden. Es bestand daher die Aufgabe, ein Verfahren zur Herstellung von Ammonnitrat bereitzustellen, das die vorstehend genannten Nachteile vermeidet und auf einfache Art und Weise eine optimale Nutzung der Reaktionswärme, unabhängig von den jeweiligen Schwankungen der Betriebsbedingungen, ermöglicht.

Die Aufgabe wird gelöst durch ein Verfahren zur Herstellung von Ammonnitrat durch Umsetzung von Salpetersäure mit Ammoniak in zwei Stufen bei erhöhter Temperatur, Eindampfung der entstandenen Ammonnitratschmelze und Gewinnung von reinem Wasserdampf, dadurch gekennzeichnet, daß die Neutralisation in der ersten Stufe zu 95 bis 99.8 Gew.-%, bezogen auf eingesetzte Salpetersäure, unter einem Druck von 3.4 bis 4.8 bar und einer Temperatur von 172 bis 185 °C durchgeführt wird und in der zweiten Stufe drucklos erfolgt, die in der ersten Stufe freigesetzte Reaktionswärme durch indirekten Wärmetausch zur Erzeugung von reinem Wasserdampf verwendet wird, wobei die abgegebene Menge des erzeugten reinen Wasserdampfes und damit die Reaktionstemperatur der ersten Neutralisationsstufe über den Druck des die erste Neutralisationsstufe verlassenden Brüden gesteuert wird und der Brüden unter dem gleichen Druck wie die erste Neutralisationsstufe steht.

Die vorliegende Erfindung betrifft ein zweistufiges Verfahren zur Herstellung von Ammonnitrat, wobei in der ersten Stufe 95 bis 99,8 Gew.-% der eingesetzten Salpetersäure mit Ammoniak neutralisiert werden.

Dabei werden Ammoniak und Salpetersäure in einem Reaktor, der Teil eines Umlaufsystems ist, mit bereits gebildetem Ammonnitrat bei Temperaturen von 172 bis 185 °C innig vermischt. Diese Mischung durchströmt den Reaktor und gibt die freigesetzte Reaktionswärme an einen in den Reaktor eingebauten Wärmeaustauscher ab.

Der Wärmeaustauscher wird mit reinem Wasser betrieben und führt die abgegebene Neutralisationswärme in Form von reinem Wasserdampf, der einen Druck von etwa 3 bis 4 bar aufweist, ab.

Der Reaktor ist mit einem Abscheider verbunden. Das Reaktionsgemisch gelangt aus dem Reaktor in den Abscheider, aus dem ein Teil zur Weiterverarbeitung abgenommen wird. Die Restmenge des Reaktionsgemisches wird dem Reaktor erneut zugeführt und dient zur Aufnahme der Reaktanten Salpetersäure und Ammoniak.

Der gebildete Brüden wird über den Abscheider direkt in ein geschlossenes Leitungssystem abgeführt und weist stets den jeweils im Abscheider und damit den in der ersten Neutralisationsstufe herrschenden Druck von 3,4 bis 4,8 bar auf.

Mittels des Brüdens wird dem Reaktionsgemisch, das in dem Umlaufsystem zirkuliert, erfindungsgemäß gerade diejenige Wärmemenge, die für die Ausübung des Prozesses benötigt wird, entnommen. Der darüber hinaus zur Verfügung stehende Teil der Reaktionswärme wird unter Berücksichtigung der jeweils im Umlaufsystem vorliegenden Reaktionsbedingungen in Form von reinem Wasserdampf gewonnen.

Da eine Änderung dieser Reaktionsbedingungen — wie Druck, Temperatur, Konzentration und Menge der Einsatzprodukte — zwangsweise eine Änderung des Verhältnisses der Wärmemenge, die für den Ablauf des Prozesses benötigt wird, zu derjenigen Wärmemenge, die in Form reinen Wasserdampfes gewonnen werden kann, zur Folge hat, gewährleistet das neue Verfahren stets eine optimale Verteilung beider Wärmemengen.

Überraschenderweise wird dies dadurch erreicht, daß über den Druck des den Abscheider (Reaktor) verlassenden Brüden die erzeugte Menge an reinem Wasserdampf gesteuert wird.

Die Einsatzstoffe, nämlich wässrige Salpetersäure und flüssige bzw. gasförmiges Ammoniak, gelangen in vorgewärmten Zustand in einen Reaktor, der Teil eines Umlaufsystems ist. Der Reaktor besitzt eine Zone zur Vermischung der Einsatzstoffe mit bereits gebildeter Ammonnitrat-Lösung und einen eingebauten Wärmeaustauscher, der mit reinem Wasser betrieben wird. Das Reaktionsgemisch erhitzt sich infolge der freiwerdenden Neutralisationswärme, durchströmt den Reaktor von unten nach oben und gibt dabei einen Teil der Reaktionswärme an den Wärmeaustauscher ab. Dabei verdampft das in dem Wärmeaustauscher befindliche reine Wasser und der gebildete Dampf wird einer Dampftrommel zugeführt. Die Dampftrommel erfüllt zwei Aufgaben : Einerseits führt sie Wasser in den Wärmeaustauscher und andererseits sammelt sie den gebildeten Wasserdampf und gibt eine Menge desselben entsprechend den jeweils vorliegenden Reaktionsbedingungen ab. Aus dem Reaktor gelangt das Reaktionsgemisch in einen Abscheider. Dort erfolgt eine Trennung des Reaktionsgemisches in eine wässrige, Ammonnitrat enthaltende, und in eine Wasserdampf (Brüden) enthaltende Phase. Ein Teil der wässrigen Ammonnitrat-Phase gelangt in die zone des Reaktors, in der die Einsatzprodukte mit der bereits gebildeten Ammonnitrat-Lösung vermischt werden, zurück. Der verbleibende Teil der Ammonnitrat-Lösung wird aus dem Abscheider abgezogen und einer weiteren Aufarbeitung zugeleitet.

Aus dem Reaktor, dem Abscheider und den sie miteinander verbindenden Rohrstücken wird so ein Umlaufsystem gebildet.

Der Druck des den Abscheider verlassenden Brüdens wird gemessen. Mittels eines Meßumformers wird durch den Druck ein Steuersignal erzeugt, das auf eine Regeleinheit einwirkt. Diese Regeleinheit steuert ein Regelventil, das in der die Dampftrommel verlassenden, Wasserdampf abführenden Leitung eingebaut ist.

Ein Ansteigen des Brüdendruckes bedeutet, daß mehr Wärme als zur Ausführung des Prozesses benötigt abgeführt und demzufolge zu wenig Wärme in Form von reinem Wasserdampf gewonnen wird. In diesem Fall löst der steigende Brüdendruck über Meßumformer auf die Regeleinheit ein Signal aus, wobei das Öffnen des Regelventils eine verstärkte Verdampfung von Wasser in der Dampftrommel zur Folge hat. Dadurch sinkt die Temperatur in der Dampftrommel und somit auch die Temperatur in dem mit der Dampftrommel verbundenen Wärmeaustauscher, der in dem Reaktorgefäß eingebaut ist. Die Vergrößerung des Temperaturgradienten (wässrige Ammonnitrat-Lösung, die im Reaktor den Wärmeaustauscher umströmt/Wasser im Wärmeaustauscher) zieht eine verstärkte Bildung von Wasserdampf im Wärmeaustauscher und somit eine dementsprechende Verringerung der Temperatur in der Ammonnitrat-Lösung nach sich. Infolge der vergrösserten Wärmeabfuhr über dem Wärmeaustauscher sinkt die Konzentration der wässrigen Ammonnitrat-Lösung ab, d. h. es verbleibt mehr Wasser als zuvor in der Ammonnitrat-Lösung. In entsprechendem Maße bildet sich weniger Brüden als zuvor und der Druck des entweichenden Brüdens sinkt. Sobald ein vorgegebener Druck erreicht wird, veranlaßt die Regeleinheit, das Regelventil in der Wasserdampf abführenden Leitung zu drosseln. Dadurch wird weniger Wärme in Form von Wasserdampf aus dem Reaktionsgemisch, das den Wärmeaustauscher umströmt, abgeführt, der Druck und die Temperatur steigen sowohl in der Dampftrommel als auch im Umlaufsystem an.

Die Drosselung des Regelventils wird so lange aufrechterhalten, bis der vorgegebene Sollwert des Brüdendruckes erreicht wird.

Eine Abnahme des Brüdendruckes bedeutet, daß weniger Wärme als zur Ausführung des Prozesses benötigt gebildet und demzufolge zuviel Wärme in Form von reinem Wasserdampf gewonnen wird. In diesem Fall löst der fallende Brüdendruck über Meßumformer auf die Regeleinheit ein Signal aus, das eine Drosselung des Regelventils auslöst. Dadurch wird weniger Wasserdampf aus der Dampftrommel abgenommen, d. h. Druck und Temperatur steigen sowohl in der Dampftrommel als auch im Umlaufsystem. Da mehr Wärme als zuvor im Umlaufsystem verbleibt, vergrößert sie die Menge an Brüden und der Druck desselben steigt an.

Sobald der vorgegebene Druck erreicht wird, veranlaßt die Regeleinheit, das Regelventil in der Wasserdampf führenden Leitung zu öffnen. Dadurch wird mehr Wärme als zuvor in Form von Wasserdampf abgeführt, Druck und Temperatur sinken sowohl in der Dampftrommel als auch im Umlaufsystem. Die verstärkte Wasserdampfentnahme wird so lange beibehalten, bis der vorgegebene Sollwert des Brüdendruckes erreicht wird.

Auf diese Weise wird eine einfache Steuerung des Umlaufsystems gewährleistet und zugleich sichergestellt, daß unabhängig von den im Umlaufsystem vorliegenden Reaktionsbedingungen die anfallende Reaktionswärme optimal, sowohl zur Ausübung des Prozesses als auch in Form von reinem Wasserdampf, bereitgestellt wird.

Man arbeitet im Umlaufsystem der ersten Neutralisationsstufe mit einem leichten Überschuß an Salpetersäure. Hierzu wird die Salpetersäure im Umlaufsystem nur zu 95 bis 99,8 % der Theorie mit Ammoniak neutralisiert. Diese Ammonnitrat-Lösung tritt aus dem Abscheider des Umlaufsystems aus, wird auf beispielsweise Atmosphärendruck entspannt und einem weiteren Abscheider zugeführt. Hier erfolgt eine Trennung von Brüden und der weiter aufkonzentrierten Ammonnitrat-Lösung, die einem weiteren Behälter zugeführt wird. Um eine stöchiometrische Umsetzung der Salpetersäure herbeizuführen, wird die hierfür erforderliche Menge gasförmigen Ammoniaks zugesetzt. In diesem Behälter wird noch auftretender Brüden abgetrennt und das Reaktionsgemisch, das beispielsweise eine Ammonnitrat-Konzentration von 80 Gew.-% besitzt, einem Fallfilmverdampfer, in dem die erforderliche Eindickung auf einen Endwert von $\geq$ 95 Gew.-% Ammonnitrat erfolgt, zugeführt. Das den Fallfilmverdampfer verlassende Produkt kann einer weiteren Verarbeitung, wie Trocknung, Granulierung oder Pelletrierung, zugeführt werden.

Der Fallfilmverdampfer wird mit Unterdruck betrieben und mit den Brüden, die dem Abscheider des Umlaufsystems entstammen, beheizt. Die Brüden kondensieren hierbei und das resultierende Kondensat wird aus dem unteren Teil des Wärmeaustauschers, der in dem Fallfilmverdampfer eingebaut ist, abgezogen und einem Abscheider zugeführt. Der andere Teil des Brüdens aus der ersten Neutralisationsstufe wird dazu benutzt, die Einsatzstoffe aufzuheizen. Hierbei kondensiert der Brüden und wird ebenfalls dem zuvor erwähnten Abscheider, der Brüdenkondensat aus dem Fallfilmverdampfer aufnimmt, zugeleitet.

In einer besonderen Ausführungsform des erfindungsgemäßen Verfahrens werden die in dem Brüden stets in geringen Mengen enthaltenen, nicht kondensierbaren Gase (hauptsächlich $N_2O$) in dem Abscheider von dem Brüdenkondensat getrennt und nach Verlassen des Abscheiders gemessen.

Die nicht kondensierbaren, überwiegend aus $N_2O$ bestehenden Gase stellen ein Zersetzungsprodukt von Ammonnitrat dar. Infolge thermischer Einwirkung zerfällt bekanntermaßen Ammonnitrat irreversibel in Distickstoffmonoxid und Wasser. Aufgrund der Reaktionsbedingungen im Umlaufsystem findet die Zersetzung in geringem Umfang stets statt und kann auch toleriert werden.

Die mengemäßige Erfassung dieser $N_2O$-haltigen Gase stellt somit ein direktes Maß durch im Umlaufsystem auftretenden Zersetzung dar.

Bei Anwendung hoher Temperaturen und sauren Milieus ist die Gefahr, daß die Zersetzung infolge von Störungen des Betriebsablaufes verstärkt auftritt und explosionsartig abläuft, höher als bei niedrigen Temperaturen und bei Verwendung von Ammoniak im Überschuß. Es muß daher darauf geachtet werden, daß eine Zunahme der Zersetzung möglichst früh erkannt wird und rasche Maßnahmen erfolgen, die Zersetzung auf das zulässige Ausmaß zu begrenzen.

Da die im Brüden enthaltenen, nicht kondensierbaren Anteile nach Verlassen des Abscheiders gemessen werden, wird die im Umlaufsystem der ersten Neutralisationsstufe auftretende Zersetzung laufend überwascht. Diese Mengenmessung steuert über eine Regeleinheit das Regelventil, das in der die Dampftrommel verlassende, Wasserdampf abführende Leitung eingebaut ist. Eine Steuerung erfolgt, sobald ein vorgegebener Wert an nicht kondensierbaren Gasen durch die Mengenmessung überschritten wird, und bewirkt unabhängig von der Steuerung dieses Regelventils durch den Brüdendruck und darüber übergeorgnet ein Öffnen dieses Regelventils. Durch schnelles Öffnen des Regelventils wird dem Umlaufsystem binnen kürzester Zeit — unabhängig von den herrschenden Reaktionsbedingungen — viel Wärme entzogen und als reiner Wasserdampf abgeführt. Dieser Wärmeverlust führt zu einer raschen Verringerung der Temperatur im Umlaufsystem. Als Folge hiervon sinkt die Bildung der Brüdendämpfe im Abscheider, so daß die Konzentration der im Umlaufsystem befindlichen Ammonnitrat-Lösung rasch absinkt. Beide Maßnahmen, nämlich das Absinken der Temperatur und die Verdünnung der wässrigen Ammonnitrat-Lösung, unterbinden die Zersetzung von Ammonnitrat auf einfache und wirkungsvolle Weise, ohne daß der Herstellprozeß unterbrochen werden muß.

Sobald der vorgegebene Wert an nicht kondensierbaren Gasen unterschritten wird, übt diese unabhängige und übergeordnete Steuerung keinen Einfluß mehr auf das Regelventil aus.

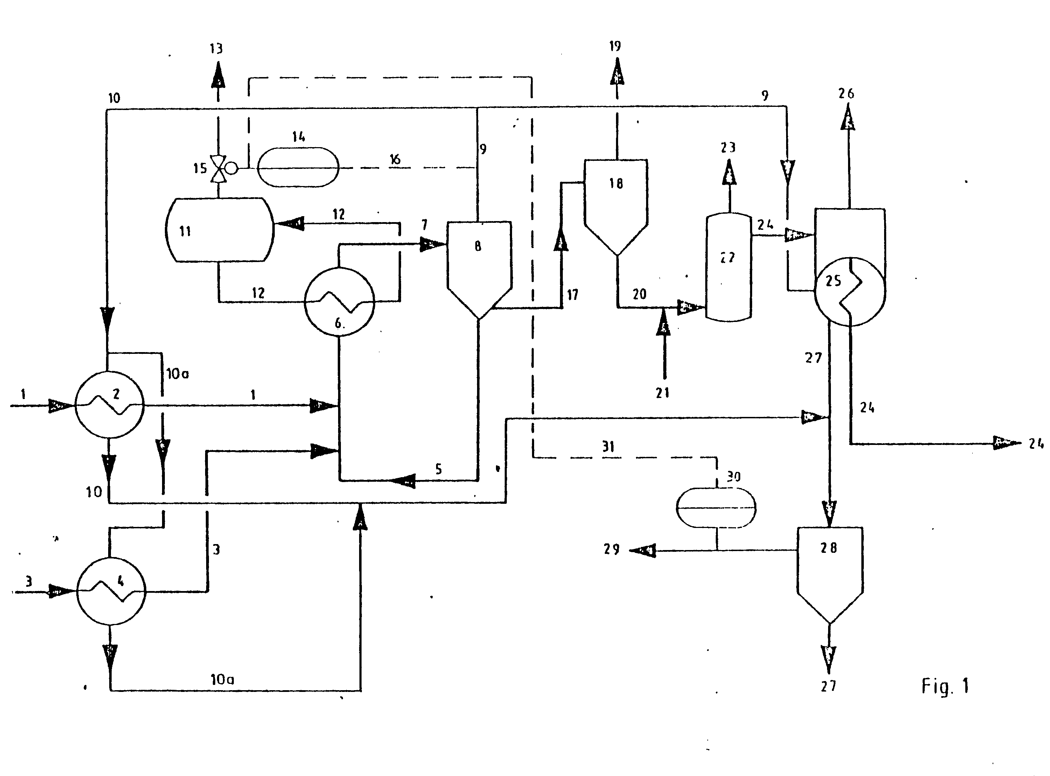

In der Figur ist ein Fließschema des erfindungsgemäßen Verfahrens wiedergegeben. Im folgenden soll anhand dieser Abbildung die vorliegende Erfindung näher erläutert werden :

Über eine Leitung 1, die einen Wärmeaustauscher 2 durchläuft, wird Ammoniak erwärmt und einem Umlaufsystem zugeführt. Wässrige Salpetersäure gelangt über eine Leitung 3, die durch einen Wärmeaustauscher 4 führt, nach Erwärmung ebenfalls in das Umlaufsystem. Das Umlaufsystem besteht aus einem Wärmetauscher-Behälter 6, der als Reaktor dient, sowie aus einem Abscheider 8 und zwei Rohrstücken 7 und 5. Der Reaktor 6 ist über ein Rohrstück 7 mit einem Abscheider 8, in dem flüssige Bestandteile von Brüdendämpfen getrennt werden, verbunden. Vom unteren Ende des Abscheiders 8 führt ein weiteres Rohrstück 5 zu dem Reaktor 6, der einen eingebauten Rohrbündelkühler enthält. Dieser Rohrbündelkühler wird über eine Leitung 12, die aus dem unteren Teil einer Dampftrommel 11 kommt, mit Wasser versorgt, das in dem Rohrbündelkühler zur Verdampfung gelangt und als Dampf über einen aufsteigenden Ast der Leitung 12 der Dampftrommel 11 zugeführt wird. Kopfseitig an der Dampftrommel ist eine Leitung 13, die der Dampfentnahme dient, angeordnet, die ein Regelventil 15 enthält. Aufgabe dieses Regelventils ist es, die Dampfentnahme zu steuern. Die vorgewärmten Einsatzstoffe, Ammoniak und wässrige Salpetersäure, gelangen in den aufsteigenden Abschnitt des Rohrstückes 5, strömen zusammen mit bereits gebildetem Ammoniumnitrat unter inniger Vermischung nach oben, gelangen in den Reaktor 6 und geben dort einen Großteil der freiwerdenden Neutralisationswärme ab. Ein Anteil der Neutralisationswärme wird zur Erzeugung von reinem Wasserdampf genutzt, der über den aufsteigenden Ast der Leitung 12 der Dampftrommel 11 zugeführt wird.

Das Reaktionsgemisch, bestehend aus Ammoniumnitrat, Wasser sowie Resten gegebenenfalls noch nicht vollständig umgesetzter Einsatzstoffe, verläßt den Reaktor 6 von unten nach oben durchströmend und gelangt über das Rohrstück 7 von dem Reaktor 6 in den Abscheider 8, wo eine Trennung in flüssige Bestandteile und Brüden erfolgt.

Der Brüden wird über eine Leitung 8 abgeführt und besitzt jeweils den Druck, der den im Umlaufsystem vorherrschenden Reaktionsbedingungen entspricht.

Im Umlaufsystem bestimmen drei Größen den Reaktionsablauf : Neben Druck und Temperatur ist die Konzentration der Ammoniumnitratlösung von Bedeutung. Werden zwei dieser Größen, beispielsweise Druck und Temperatur, festgelegt, so stellt sich die dritte Größe, in diesem Fall die Konzentration der Lösung, von selbst ein.

Diesem Umstand trägt die Steuerung des Regelventils 15 durch eine Druckregelung 14, die mit der Leitung 9 über eine Impulsleitung 16 verbunden ist, Rechnung. Ein Absinken des Brüdendruckes in Leitung 9 bewirkt eine Drosselung bzw. Schließen von Regelventil 15. Dadurch wird dem Umlaufsystem ein geringerer Anteil der Neutralisationswärme in Form von Wasserdampf entzogen, die Temperatur im Umlaufsystem beginnt zu steigen und, da mehr Brüden abgeführt wird, erhöht sich auch die Konzentration bis auf den gewünschten Wert. Umgekehrt bewirkt ein Anstieg des Brüdendruckes durch Öffnen des Regelventils 15 eine Erhöhung der Wasserdampfabgabe der Dampftrommel 11, d. h. ein größerer Anteil der Neutralisationswärme wird in Form von Wasserdampf dem Umlaufsystem entzogen, die Temperatur sinkt, gleichzeitig wird weniger Brüden abgeschieden und die Konzentration der Ammoniumnitrat-Lösung sinkt.

Die flüssigen Bestandteile im unteren Teil des Abscheiders 8 verbleiben zum Teil im Umlaufsystem und strömen von dem Abscheider 8 durch das Rohrstück 5 zu dem Reaktor 6, wobei sie mit den Einsatzprodukten vermischt werden. Ein anderer Teil der flüssigen Bestandteile wird aus dem Abscheider 8 über eine Leitung 17 einem weiteren Abscheider 18, der unter Normaldruck arbeitet, zugeleitet. Der dabei freigesetzte Brüden wird über eine Leitung 19 abgeleitet und dient zur Vorwärmung der Einsatzstoffe. Zur Vereinfachung sind in der Figur die entsprechenden Wärmeaustauscher nicht eingezeichnet. Die aufkonzentrierte Ammoniumnitrat-Lösung tritt unten aus dem Abscheider 18 in eine Leitung 20 aus, wird mit einer Restmenge Ammoniak aus einer Leitung 21 die in die Leitung 20 mündet, versetzt und gelangt in einen Behälter 22. Gebildeter Brüden entweicht über eine Leitung 23.

Die Ammoniumnitrat-Lösung, die relativ stark konzentriert vorliegt, verläßt den Behälter 22 über eine Leitung 24 und gelangt in einen Fallfilmverdampfer 25, der einen Wärmeaustauscher in Form eines Rohrbündels enthält. Die Rohre des Rohrbündels werden von der Ammoniumnitratschmelze durchflossen. Das fertige Produkt verläßt den Fallfilmverdampfer über eine Leitung 24 a und gebildeter Brüden wird mit einem Druck von 0,4 bar über eine Leitung 26 entfernt.

Der Brüden des Abscheiders 8 dient gleichzeitig zur Aufheizung der Einsatzstoffe und zum Beheizen des Fallfilmverdampfers 25. Die Leitung 9, die den Brüden aus dem Abscheider 8 ableitet, ist über eine Impulsleitung 16 mit einer Regeleinheit (Druckregelung) 14, die auf das Regelventil 15 einwirkt, verbunden. Eine Leitung 10, die hinter der Impulsleitung 16 von der Leitung 9 abzweigt, versorgt den Wärmeaustauscher 2 mit Brüden und eine Leitung 10 a, die mit Leitung 10 in Verbindung steht, speist den Wärmeaustauscher 4 mit Brüden. Leitung 9 endet in dem Fallfilmverdampfer 25 und schickt Brüden in die Zwischenräume des Rohrbündels. Die Rohre des Rohrbündels werden von der Ammoniumnitratschmelze durchflossen. Der Brüden aus Leitung 9 kondensiert und verläßt über Leitung 27 den Fallfilmverdampfer. Kondensat und nicht kondensierbare Produkte, die aus den Leitungen 10 und 10 a kommen, werden der Leitung 27 zugeführt und gelangen zusammen mit dem in dieser Leitung 27 bereits vorliegenden Gemisch in einen Abscheider 28, in dem eine Trennung in kondensierbare und nicht kondensierbare Anteile erfolgt. Die nicht kondensierbaren Anteile sind hauptsächlich auf Distickstoffmonoxid, das in geringen Mengen stets als Zerfallprodukt von Ammoniumnitrat auftritt, zurückzuführen. Ihre Menge stellt ein Maß für den Grad der Zersetzung von Ammoniumnitrat dar. Sie verlassen über eine Leitung 29 den Abscheider 28. In Leitung 29 ist eine Gasmengenmessung 30 eingebaut, die ihrerseits über eine Impulsleitung 31 mit dem Regelventil 15 verbunden ist. Ein unzulässiges Ansteigen der Menge an Distickstoffmonoxid löst übergeordnet über die Druckregelung 14 ein Öffnen von Ventil 15 aus. Dadurch wird aus der Dampftrommel 11, die über eine Leitung 32 mit Frischwasser versorgt wird und einen bestimmten Instand an Wasser aufweist, mehr Dampf entnommen und demzufolge auch mehr Wärme aus dem Reaktor 6 abgeführt mit der Folge, daß die Temperatur des Reaktionsgemisches in dem Reaktor 6 und damit auch im Umlaufsystem gesenkt wird.

Sobald die Menge an Distickstoffmonoxid wieder auf den vorgegebenen Wert absinkt, endet die Einwirkung der Gasmengenmessung auf das Regelventil 15.

**Patentansprüche**

1. Verfahren zur Herstellung von Ammonnitrat durch Umsetzung von Salpetersäure mit Ammoniak in zwei Stufen bei erhöhter Temperatur, Eindampfung der entstandenen Ammonnitratschmelze und Gewinnung von reinem Wasserdampf, dadurch gekennzeichnet, daß die Neutralisation in der ersten Stufe zu 95 bis 99.8 Gew.%, bezogen auf eingesetzte Salpetersäure, unter einem Druck von 3.4 bis 4.8 bar und einer Temperatur von 172 bis 185 °C durchgeführt wird und in der zweiten Stufe drucklos erfolgt, die in der ersten Stufe freigesetzte Reaktionswärme durch indirekten Wärmetausch zur Erzeugung von reinem Wasserdampf verwendet wird, wobei die abgegebene Menge des erzeugten reinen Wasserdampfes und damit die Reaktionstemperatur der ersten Neutralisationsstufe über den Druck des die erste Neutralisationsstufe verlassenden Brüdens gesteuert wird und der Brüden unter dem gleichen Druck wie die erste Neutralisationsstufe steht.

2. Verfahren nach Anspruch 1, dadurch gekennzeichnet, daß die in den Brüden der ersten Neutralisationsstufe enthaltenen, nicht kondensierbaren, gasförmigen Anteile nach Kondensieren des Brüdens gemessen werden und bei Überschreiten eines vorgegebenen Wertes die abgegebene Menge des reinen Wasserdampfes schlagartig erhöht und diese erhöhte Entnahme von reinem Wasserdampf so lange beibehalten wird, bis die gasförmigen, nicht kondensierbaren Anteile im Brüden unter den vorgegebenen Wert absinken.

3. Verfahren nach Anspruch 1 und 2, dadurch gekennzeichnet, daß der gesamte Brüden der ersten Neutralisationsstufe dem Prozeß zugeführt wird und durch vollständiges Kondensieren zum Aufheizen der Einsatzstoffe und zum Aufkonzentrieren der die zweite Neutralisationsstufe verlassenden Ammonnitrat-Schmelze dient.

4. Verfahren nach Anspruch 1 bis 3, dadurch gekennzeichnet, daß in der zweiten Neutralisationsstufe bei einer Temperatur von 125 bis 130 °C und einer Konzentration von 78 bis 82 % Ammonnitrat, bezogen auf die gesamte Ammonnitrat-Schmelze, gearbeitet wird.

## Claims

1. A process for the preparation of ammonium nitrate by the reaction of nitric acid with ammonia in two stages at elevated temperature, concentration of the resultant ammonium nitrate melt by evaporation and recovery of pure steam, characterised in that 95 to 99.8 wt.%, related to the nitric acid used, is neutralised in the first stage at a pressure of 3.4 to 4.8 bar and a temperature of 172 to 185 °C and in the second stage at atmospheric pressure, the heat of reaction released in the first stage is used to produce pure steam by indirect heat exchange, whereby the amount of generated steam given off and thus the reaction temperature of the first neutralisation stage is controlled by means of the pressure of the vapour leaving the first neutralisation reaction stage and the vapour is under the same pressure as the first neutralisation stage.

2. A process according to claim 1, characterised in that the non-condensable gaseous components contained in the vapour of the first neutralisation stage are measured after the vapour has been condensed and when a preset level is exceeded, the amount of pure steam given off is suddenly increased and the pure steam is taken off at the increased rate until the gaseous non-condensable components in the vapour fall below the preset level.

3. A process according to claims 1 to 2, characterised in that all the vapour from the first neutralisation stage is fed into the process and by its complete condensation serves to heat the feed materials and to concentrate the ammonium nitrate melt leaving the second neutralisation stage.

4. A process according to claims 1 to 3, characterised in that the second neutralisation stage takes place at a temperature of 125 to 130 °C and with an ammonium nitrate concentration of 78 to 82 % related to the ammonium nitrate melt as a whole.

## Revendications

1. Procédé pour la fabrication de nitrate d'ammonium par réaction d'acide nitrique avec ammoniac en deux étapes à température élevée, évaporation de la masse fondue de nitrate d'ammonium formée et récupération de vapeur d'eau pure, caractérisé en ce que la neutralisation est effectuée dans la première étape jusqu'à 95 à 99,8 % en poids de l'acide nitrique mis en jeu, sous une pression de 3,4 à 4,8 bar et à une température de 172 à 185 °C et s'effectue sans pression dans la seconde étape, la chaleur de réaction libérée dans la première étape est utilisée par échange de chaleur indirect pour la production de vapeur d'eau pure, la quantité cédée de la vapeur d'eau pure produite et donc la température de réaction de la première étape de neutralisation étant commandées par l'intermédiaire de la pression des vapeurs quittant la première étape de neutralisation et les vapeurs étant sous la même pression que dans la première étape de neutralisation.

2. Procédé selon la revendication 1, caractérisé en ce que les fractions gazeuses non condensables contenues dans les vapeurs de la première étape de neutralisation sont mesurées après condensation des vapeurs et en cas de dépassement d'une valeur prédéterminée, la quantitée cédée de la vapeur d'eau pure s'élève brusquement et ce prélèvement accru de vapeur d'eau pure est maintenu jusqu'à ce que les fractions gazeuses non condensables dans les vapeurs tombent au-dessous de la valeur prédéterminée.

3. Procédé selon les revendications 1 et 2, caractérisé en ce que la totalité des vapeurs de la première étape de neutralisation est envoyée au procédé et sert par condensation complète pour le chauffage des matières mises en jeu et pour la concentration de la masse fondue de nitrate d'ammonium quittant la seconde étape de neutralisation.

4. Procédé selon les revendications 1 à 3, caractérisé en ce que l'on opère dans la seconde étape de neutralisation à une température de 125 à 130 °C et une concentration de 78 à 82 % de nitrate d'ammonium, par rapport à la masse fondue totale de nitrate d'ammonium.

Fig. 1